# EUROPÄISCHE PATENTSCHRIFT

(11) **EP 0 811 204 B1**
(45) Veröffentlichungstag und Bekanntmachung des Hinweises auf die Patenterteilung: **22.09.1999**
(21) Anmeldenummer: 95926386.4
(22) Anmeldetag: 05.07.1995
(51) Int. Cl.: G06K 19/073

(54) **VERARBEITUNG LANGER NACHRICHTEN IN EINER CHIPKARTE**
PROCESSING OF LONG MESSAGES IN A CHIP CARD
TRAITEMENT DE LONGUES INFORMATIONS DANS UNE CARTE A PUCE

(43) Veröffentlichungstag der Anmeldung: 10.12.1997
(73) Patentinhaber: International Business Machines Corporation, Armonk, N.Y. 10504 (US)
(72) Erfinder: HÄNEL, Walter, D-71088 Holzgerlingen (DE); WITZEL, Martin, D-71101 Schönaich (DE)
(74) Vertreter: Rach, Werner, Dr.
(86) Internationale Anmeldenummer: EP9502606
(87) Internationale Veröffentlichungsnummer: WO9702543

(56) Entgegenhaltungen:
- EP-A- 0 481 881
- EP-A- 0 492 450
- EP-A- 0 559 205
- EP-A- 0 583 006

## Beschreibung

### Gebiet der Erfindung

Die Erfindung betrifft ein Verfahren und eine Vorrichtung zur Verarbeitung von Nachrichten in einer Chipkarte mit einer Prozessoreinheit und einem beschreibbaren, nicht flüchtigen Speicher wobei eine Zugriffsberechtigung einer Nachricht auf die Prozessorkarte vor einer weiteren Behandlung der Nachricht überprüft werden muß. Die Erfindung betrifft weiter ein Verfahren zur Kommunikation mit der Prozessorkarte.

### Stand der Technik

Als Datenträgerkarten oder Chipkarten werden heute tragbare Karten, zumeist in etwa in Scheckkartenformat und vorzugsweise aus Kunststoff oder Metall, mit einem darin integrierten elektronischen Chip bezeichnet. Im Gegensatz zu einfachen Speicherkarten (die als Memory Chip-Cards oder Memory-Cards bekannt sind) besitzen intelligente Datenträgerkarten, oder Prozessorkarten, (auch multifunktionale Chipkarten, oder Smart-Cards genannt) neben einem Speicherbereich einen eigenen Prozessor zur Kontrolle der auf dem Chip der Datenträgerkarte gespeicherten Daten. Dies erlaubt einen besseren Schutz der Daten und führt zu einer verbesserten Funktionalität der Prozessorkarten. Einfache Speicherkarten erlauben im allgemeinen nur ein Schreiben und Lesen der Daten. Intelligente Prozessorkarten verfügen darüber hinaus noch im allgemeinen über Funktionen zur Strukturierung, Lokalisierung, Verwaltung und zum Schutz der Daten.

Der vor allem wegen der erhöhten Fälschungssicherheit zunehmende Einsatz von Prozessorkarten erstreckt sich auf zahlreiche Anwendungsgebiete. Anwendungen mit Prozessorkarten, also Anwendungen, für die eine Kommunikation eines beliebigen Gerätes mit einer Prozessorkarte erforderlich ist, können beispielsweise bargeldloses Bezahlen, Identifikation des Prozessorkarteninhabers, Speicherung von Daten oder dergleichen sein.

Um einen unberechtigten Zugriff auf Daten der Prozessorkarte zu vermeiden, muß vor einem Datenzugriff die entsprechende Zugriffsberechtigung erst nachgewiesen werden. Als Verfahren zur Überprüfung der Zugriffsberechtigung könnem z.B. eine Authentifikation, beispielweise durch einen MAC (Message Authentification Code) oder eine Identifikationsnummer PIN (Personal Identification Number), oder eine Verschlüsselung der Daten dienen. Die Berechtigung muß nachgewiesen werden, bevor Daten wirksam überschrieben werden können. Die Authentifikation stellt eine Maßnahme dar, mit der die Authentizität von Subjekten und Objekten festgestellt werden soll. Meist wird dabei ein symmetrischer Verschlüsselungsalgorithmus, wie der DES (digital encryption standard), oder ein asymmetrischer Verschlüsselungsalgorithmus, wie z.B. ein Public-Key Algorithmus, benutzt.

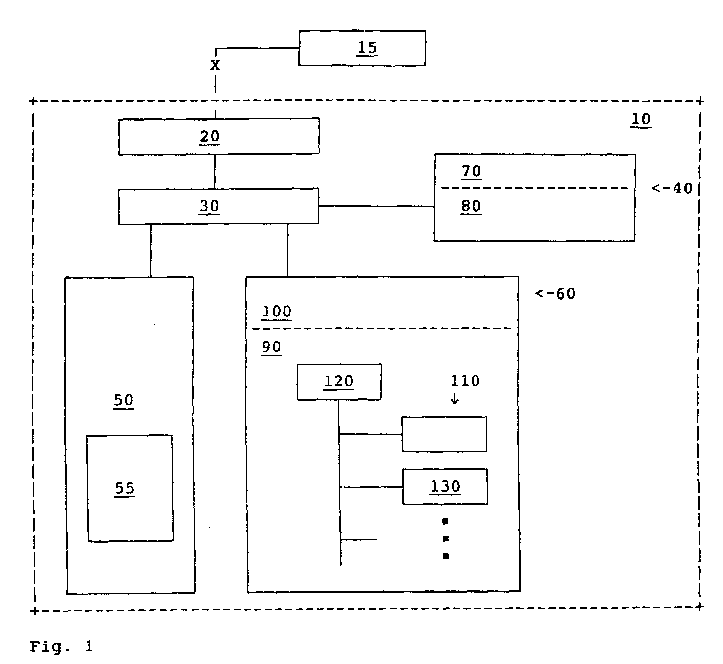

Fig. 1 zeigt den schematischen Aufbau einer Prozessorkarte 10. Die Prozessorkarte 10 kommuniziert mit der Außenwelt, hier dargestellt durch eine beliebige Vorrichtung 15, die beispielsweise ein Kartenlesegerät, ein Computer oder dergleichen sein kann, über ein I/O-Port 20, das mit einer Prozessoreinheit 30 verbunden ist. Das I/O-Port 20 bildet die Schnittstelle zur Außenwelt der Prozessorkarte 10 und leitet empfangene Nachrichten oder sonstige Informationen von der Außenwelt an die Prozessoreinheit 30 weiter. Auch können Nachrichten oder Informationen der Prozessorkarte 10 über das I/O-Port 20 an die Außenwelt weitergegeben werden.

Die Prozessoreinheit 30 ist mit einem flüchtigen, beschreibbaren Speicher 40, einem nicht flüchtigen, nicht beschreibbaren Speicher 50, sowie einem ebenfalls nicht flüchtigen, jedoch beschreibbaren Speicher 60 verbunden. Der flüchtige Speicher 40 wird im allgemeinen als ein RAM (Random Access Memory) ausgeführt und soll im folgenden auch als RAM 40 bezeichnet werden. Der nicht beschreibbare, nicht flüchtige Speicher 50 ist in heutigen Prozessorkarten 10 vorzugsweise als ROM (Read Only Memory) ausgeführt und soll im folgenden als ROM 50 bezeichnet werden. Entsprechend kann auch ein PROM (Programmable Read Only Memory) oder dergleichen verwendet werden. Der nicht flüchtige, jedoch beschreibbare Speicher 60 ist in Prozessorkarten 10 vorwiegend als EEPROM (Electrically Erasable Programmable Read Only Memory) ausgeführt und soll im folgenden als EEPROM 60 bezeichnet werden.

Flüchtige Speicher, wie das RAM 40, unterscheiden sich von nicht flüchtigen, wie das ROM 50 oder das EEPROM 60, dadurch, daß bei den flüchtigen Speichern der Speicherinhalt nach Entfernen der Versorgungsspannung verloren geht, während der Speicherinhalt in den nicht flüchtigen Speichern auch nach Entfernen der Versorgungsspannung erhalten bleibt. Nicht beschreibbare Speicher, wie das ROM 50, erhalten eine feste Programmierung (z. B. durch Einbrennen), die nicht mehr verändert werden kann. Beschreibbare Speicher, wie das RAM 40 oder das EEPROM 60, können durch die Prozessoreinheit 30 in ihrem Speicherinhalt durch Schreibvorgänge verändert werden, wobei die Anzahl der möglichen Schreibvorgänge im allgemeinen durch deren Lebenszeit begrenzt ist. Flüchtige Speicher haben im allgemeinen eine deutlich geringere Zugriffszeit (etwa Faktor 1 : 10 000) als nicht flüchtige Speicher und werden deshalb vorzugsweise als schnelle Arbeitsspeicher für die Prozessoreinheit 30 verwendet.

In dem Bereich des ROM 50 ist vorzugsweise auch als feste Programmierung ein Betriebssystem 55 der Prozessorkarte 10 untergebracht. Das Betriebssystem 55 kann jedoch auch, zumindest teilweise, in dem EEPROM 60 abgelegt sein und enthält Programme für die Prozessorkarte 10, die die Ausführung von Programmen und Abläufen, die Verteilung von Betriebsmittel auf die einzelnen Benutzerprogramme und die Aufrechterhaltung der Betriebsart in der Prozessorkarte 10 steuern und überwachen. Der Speicherbereich im RAM 40 teilt sich während des Betriebes der Prozessorkarte 10 in einen von dem Betriebssystem 55 der Prozessoreinheit 30 als Pufferspeicher genutzten Bereich 70 und einem Bereich 80, der für den Betrieb von Programmen verwendet werden kann, auf.

Im EEPROM 60 können Daten durch die Prozessoreinheit 30 abgelegt werden bzw. aus diesem wieder gelesen werden. Das EEPROM 60 weist hierfür im allgemeinen einen Bereich 90 mit einem Dateisystem und einem Bereich 100 ohne Dateisystem auf. In dem Bereich 90 mit Dateisystem sind eine Vielzahl von Dateien (Files) 110, vorzugsweise in einer Baumstruktur, angeordnet. Die Dateien 110 sind über ein Wurzelverzeichnis 120 zugänglich, das auch vorzugsweise ein Inhaltsverzeichnis der angelegten Dateien 110 aufweist. Die Datenbreite der einzelnen Dateien 110 kann beim Anlegen einer Datei durch die Prozessoreinheit 30, im Rahmen der Gesamtlänge des EEPROM 60, frei definiert werden. Weiterhin können Zugriffsbedingungen auf jede einzelne der Dateien 110, wie z.B. ein reiner Lese- oder ein reiner Schreib-, oder ein kombinierter Lese-/Schreib-Zugriff, definiert werden. Dabei kann ein Schreibzugriff auf eine der Dateien 110 durch ein Authentifikationssverfahren (weiter unten beschrieben), wie z. B. durch eine Prüfsumme bei Verwendung eines MAC, abgesichert werden. In welche Datei oder Dateien der Vielzahl von Dateien 110 eine Nachricht abgespeichert werden soll, oder auf welche der Dateien eine Nachricht Zugriff haben soll, ist als Information entweder in der Nachricht selbst vorhanden oder die Prozessoreinheit 30 weiß, z.B. aufgrund vorheriger Nachrichten, den entsprechenden Ort. Eine Nachricht kann dabei jede, vorzugsweise in sich geschlossene, Informationseinheit, die von einer Nachrichtenquelle zu einer Nachrichtensenke, hier der Prozessorkarte 10, transportiert wird.

Jede der Dateien 110 ist wiederum in eine Vielzahl von einzelnen Datensätzen (Records) aufgeteilt, die in einem verarbeitungstechnischen Zusammenhang stehen. Die Datensätze bilden innerhalb einer Datei eine logische Einheit und sollten vorzugsweise nur als Ganzes geschrieben oder gelesen werden. Der Bereich 100 ohne Dateisystem ist zum Ablegen permanenter Daten des Betriebssystemes 55 vorgesehen und besitzt wahlfreien Zugriff (random access).

Wenn die Prozessorkarte 10 von der Außenwelt über das I/O-Port 20 eine Nachricht erhält, so wird diese vor einer weiteren Verarbeitung von der Prozessoreinheit 30 zuerst in den Bereich 80 des RAM 40 geschrieben. Zur Authentifikation der Nachricht, und damit zur Überprüfung der Zugriffsberechtigung auf die Prozessorkarte 10, enthält die Nachricht vorzugsweise einen Zusatz, der belegt, daß die Nachricht von einer bestimmten Adresse stammt und nicht auf dem Weg von dieser Adresse zur Prozessorkarte 10 verändert wurde. Als ein solcher Zusatz wird heutzutage vorzugsweise der MAC verwendet, der eine Prüfsumme enthält, um die Zugriffsberechtigung, z.B. für einen Schreib- oder Lesezugriff nachzuweisen und überprüfen zu können. Andere Authentifikationsverfahren, wie z.B. die oben aufgeführten, werden analog angewandt.

Erst wenn die Zugriffsberechtigung von der Prozessoreinheit 30 überprüft ist und positiv bestätigt wird, kann die Nachricht weiter prozessiert werden, indem sie z. B. aus dem RAM 40 in das EEPROM 60 durch die Prozessoreinheit 30 kopiert oder verschoben wird. Bei diesem Vorgang ist zu verstehen, daß jede einzelne, in die Prozessorkarte 10 eintreffende Nachricht auf ihre Zugriffsberechtigung geprüft werden muß, bevor sie weiter prozessiert werden kann. Jedoch muß die Nachricht im allgemeinen vollständig vorliegen, da, wie bei der Verwendung des MAC, die Zugriffsberechtigung nur bei Vorliegen der vollständigen Nachricht, d. h. des gesamten Nachrichtendatensatzes, überprüft werden kann.

Da der Speicherbereich des RAM 40 im allgemeinen sehr klein ist (z. B. 240 Byte) und zudem durch den von dem Betriebssystem 55 verwendeten Bereich 70 verkleinert wird, bleibt für die Aufnahme von Nachrichten im Bereich 80 nur ein sehr beschränkter Speicherbereich (z. B. etwa 64 Byte) übrig. Dementsprechend dürfen Nachrichten, die von Prozessorkarten 10 prozessiert werden sollen, eine bestimmte maximale Datengröße (im Augenblick 64 Byte) nicht überschreiten. Längere Nachrichten müssen in kleinere zerteilt werden, was aufgrund der speziellen Sicherheitsbedingungen und der damit verbundenen Verfahren zur Ermittlung der Zugriffsberechtigung, wie den Authentifikationsverfahren, in der Kommunikation mit Prozessorkarten 10 zu einer Verlängerung der Kommunikationszeiten führt.

Ein Beispiel für eine mögliche Nachrichtenübertragung zwischen der Außenwelt und der Prozessorkarte 10 kann folgende Nachricht sein: "Schreibe in Datei Nr. X in den Datensatz Nr. Y die Daten DATEN, wobei als Zugriffsberechtigung ein MAC von Z steht". Dabei soll DATEN für eine beliebige Datenfolge stehen. Im EEPROM 60 der Prozessorkarte 10 ist ein Schlüssel abgelegt, der zusammen mit den Daten DATEN eine Überprüfung des MAC, z.B. gemäß ANSI X9.9 oder ANSI X9.19, zuläßt. Die Prozessoreinheit 30 schreibt zuerst die Nachricht in den Bereich 80 des RAM 40 und überprüft, nach vollständigem Erhalt der Nachricht, anhand des MAC Z und der Daten DATEN die Berechtigung der Nachricht für einen Schreibvorgang. Liegt keine Berechtigung vor, oder konnte die Berechtigungsbedingung z. B. aufgrund eines Übertragungsfehlers nicht erfüllt werden, erfolgt ein Abbruch durch das Betriebssystem 55 der Prozessorkarte 10. Kann eine Berechtigung für einen Schreibzugriff der Nachricht auf die Prozessorkarte 10 durch die Nachricht jedoch nachgewiesen werden, wird die Nachricht durch die Prozessoreinheit 30 in eine für diesen Schreibzugriff vorgesehene Datei 130 der Vielzahl von Dateien 110 geschrieben, wobei das Schreiben entweder als Neuschreiben oder Überschreiben bereits vorhandener Daten in der Datei 130 durchgeführt werden kann. Nach erfolgreich durchgeführtem Schreibvorgang gibt die Prozessoreinheit 30 dies als Rückmeldung an die Außenwelt mit Hilfe des I/O-Ports 20 wieder zurück. Der gesamte Ablauf entspricht den Definitionen nach ISO/IEC 7816.

Problematisch an dieser Kommunikationsweise zwischen der Außenwelt und der Prozessorkarte 10 ist zum einen, daß die Nachricht evtl. nicht vollständig aufgrund der begrenzten Datengröße in das RAM 40 hineingeschrieben werden kann und weiterhin, daß eine Berechtigung zuerst nachgewiesen werden muß, bevor ein Schreibzugriff erfolgen kann oder darf.

Patentschrift EP-A-492 450 beschreibt ein Verfahren zur Speicherung von Daten in einer Speicherkarte durch ein EEPROM. Die Speicherkarte hat keine Aufteilung von flüchtigen und nicht flüchtigen Speicher. Nach außen hat diese Speicherkarte die Funktion wie ein flüchtiger Speicher, d.h. der Busanschluß erfolgt wie für einen flüchtigen Speicher.

Patentschrift EP-A-0 559 205 beschreibt ein Verfahren zur Verschlüsselung von Nachrichten auf einer Chipkarte. Nachrichten, die wegen ihrer großen Datenmenge nicht im internen Puffer abspeicherbar sind, werden in kleinere Datenblöcke zerlegt. Die Verschlüsselung der Nachrichten auf der Chipkarte ist nicht an eine Zugriffsberechtigung geknüpft, da die Nachrichten nicht zur Speicherung auf der Chipkarte gedacht sind.

### Zusammenfassung der Erfindung

Der Erfindung liegt die Aufgabe zugrunde, eine Kommunikation mit einer Chipkarte, weitestgehend unabhängig von der Datengröße der von der Chipkarte zu empfangenden Nachrichten, zu ermöglichen. Die Aufgabe der Erfindung wird entsprechend der unabhängigen Ansprüche gelöst.

Erfindungsgemäß wird eine in eine Chipkarte eintreffende Nachricht von einer Prozessoreinheit in einen beschreibbaren, nicht flüchtigen Speicher, wie einem EEPROM, geschrieben und gespeichert bevor die Nachricht hinsichtlich ihrer Zugriffsberechtigung auf die Chipkarte durch die Prozessoreinheit überprüft wird. Da Speicherplätze in dem beschreibbaren, nicht flüchtigen Speicher in ihrer Datengröße, jeweils im Rahmen der gesamten Datengröße des beschreibbaren, nicht flüchtigen Speichers, frei definierbar sind, können so Nachrichten mit nahezu beliebig großer Datengröße von der Chipkarte auf ihre Zugriffsberechtigung geprüft und damit prozessiert werden. Dabei können die in die Chipkarte von der Außenwelt her eingehenden Nachrichten entweder in den beschreibbaren, nicht flüchtigen Speicher unmittelbar oder erst mittelbar, z.B. nachdem die Nachrichten vorher in einem beschreibbaren, flüchtigen Speicher zwischengespeichert und eventuell auch vorprozessiert wurden, gespeichert werden. Ein Vorprozessieren kann hier beispielsweise ein Ermitteln der Adresse der Speicherstelle sein, in der die Nachricht prozessiert werden soll. Da die Zugriffsberechtigung für einen Schreibvorgang in den beschreibbaren, nicht flüchtigen Speicher vor einer weiteren Prozessierung der Nachricht erst noch überprüft werden muß, erfolgt die Speicherung in dem beschreibbaren, nicht flüchtigen Speicher im Sinne einer Zwischenspeicherung, wobei die endgültige Position noch nicht festgelegt ist.

Die Erfindung findet Verwendung für die Kommunikation mit Chipkarten. Die Kommunikation einer beliebigen Vorrichtung mit einer Chipkarte erfolgt durch ein Aussenden einer Nachricht an die Chipkarte durch die Vorrichtung, ein Empfangen der Nachricht durch die Prozessorkarte und ein Verarbeiten der Nachricht nach einem dem erfindungsgemäßen Verfahren.

Die für die erfindungsgemäße Prozessierung erforderlichen Anweisungen werden vorzugsweise in dem Betriebssystem der Chipkarte abgelegt.

Weitere, vorteilhafte Ausführungen der Erfindung finden sich in den Unteransprüchen.

### Beschreibung der Zeichnungen

Zur näheren Erläuterung der Erfindung sind im folgenden Ausführungsbeispiele mit Bezugnahme auf die Zeichnungen beschrieben. Bauteile mit gleicher Funktionalität sind mit den gleichen Bezugszeichen versehen. Es zeigen:
- Fig. 1: den schematischen Aufbau einer Prozessorkarte; und
- Fig. 2-4: Ausführungsformen der Erfindung.

### Beschreibung der Erfindung

Im weiteren sollen, mit Hinblick auf das einfachere Verständnis, der beschreibbare, flüchtige Speicher 40 wieder als RAM 40 und der beschreibbare, nicht flüchtige Speicher 60 wieder als EEPROM 60 bezeichnet werden. Jedoch ist die Erfindung nicht auf diese Ausführungsformen der Speicher begrenzt.

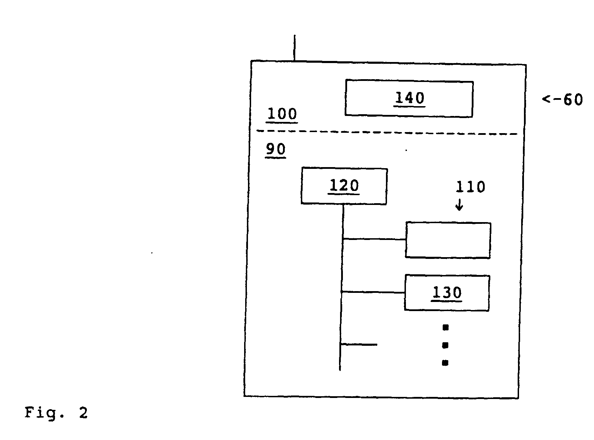

In einer ersten Ausführungsform (Fig. 2) erfolgt die Speicherung der hereinkommenden Nachricht in einen Zwischenspeicher 140 in dem Bereich 100 des EEPROM 60, der sich außerhalb des Bereiches 90 mit Dateisystemen befindet. Nach erfolgter Speicherung der Nachricht in dem Zwischenspeicher 140 überprüft die Prozessoreinheit 30 die Zugriffsberechtigung der zwischengespeicherten Nachricht, z. B., indem der MAC nachgerechnet wird. Liegt keine gültige Zugriffsberechtigung vor, wird die Nachrichtenbearbeitung abgebrochen und die zwischengespeicherte Nachricht kann von einer nachfolgenden überschrieben werden. Konnte die Zugriffsberechtigung jedoch nachgewiesen werden, wird die Nachricht aus dem Zwischenspeicher 140 in die für die Abspeicherung der Nachricht vorgesehene Datei 130 der Vielzahl von Dateien 110 kopiert oder verschoben. Nach erfolgter Speicherung der Nachricht in der Datei 130 erfolgt eine Rückmeldung entsprechend dem oben Gesagten.

Bei dieser ersten Ausführungsform ist bei den meisten heutzutage verwendeten beschreibbaren, nicht flüchtigen Speichern, wie dem EEPROM 60, sicherzustellen, daß der Zwischenspeicherbereich 140 z. B. nach einer bestimmten Anzahl von erfolgten Schreibzyklen (etwa 10.000 - 100.000) an eine andere Stelle des Bereiches 100 verlegt wird, da diese beschreibbaren, nicht flüchtigen Speicherelemente nur eine bestimmte Anzahl von Schreibzugriffen auf eine Speicherstelle zulassen, und so bei Erreichen des Lebensendes einer Speicherzelle ein Verlust von Daten auftreten kann.

Auch ist bei der ersten Ausführungsform zu berücksichtigen, daß die Kopieraktion der Nachricht aus dem Zwischenspeicher 140 an den endgültigen Ort der Nachricht in der Datei 130 bei den heute verwendeten Speichern gegenüber anderen Operationen, wie Schreiben oder Lesen im RAM 40 oder Lesen im EEPROM 60, relativ zeitaufwendig (etwa Faktor 10.000) ist. Deshalb werden vorzugsweise nur solche Nachrichten, die aufgrund ihrer Datengröße nicht unmittelbar im RAM 40 empfangen werden können, in dem Zwischenspeicher 140 zwischengespeichert. Dies kann z.B. dadurch erreicht werden, daß die eingehende Nachricht von der Prozessoreinheit 30 zuerst (sequentiell) in das RAM 40 geschrieben wird. Bei Überschreiben der zur Verfügung stehenden Speichermenge des RAM 40 wird der dort gespeicherte Teil der Nachricht in den Zwischenspeicher 140 kopiert und der Rest der Nachricht nun unmittelbar in den Zwischenspeicher 140 abgespeichert und evtl. dem aus dem RAM 40 kopierten Teil der Nachricht angehängt.

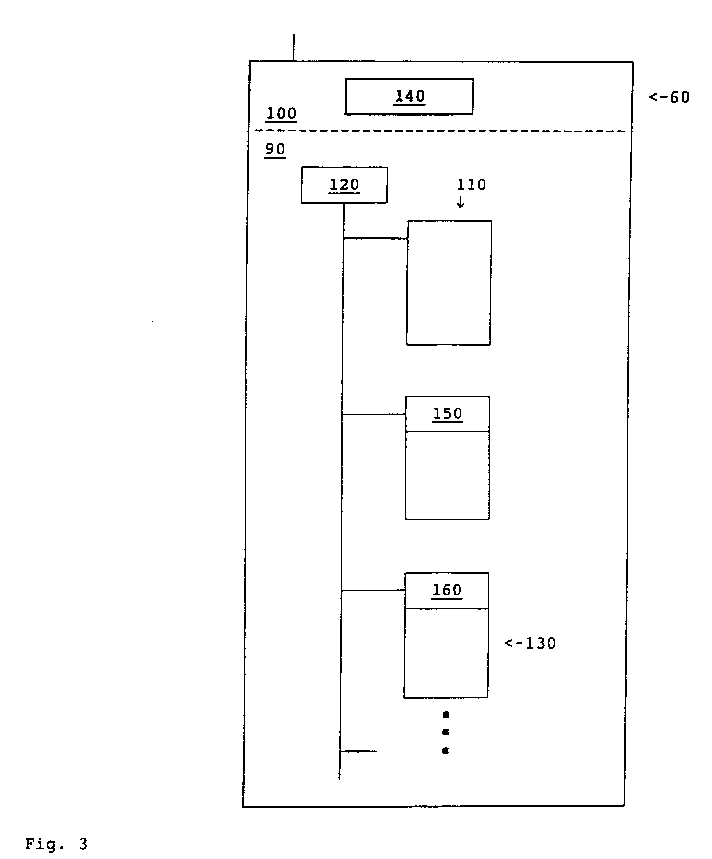

Fig. 3 zeigt eine zweite Ausführungsform der Erfindung. Solche Dateien der Vielzahl von Dateien 110, deren Datensatzlänge die Größe des als Pufferspeicher genutzten Bereiches 70 überschreitet, oder wo ein solches Überschreiten zu erwarten ist, weisen nun einen lokalen Zwischenspeicher 150, 160, usw. auf. Liegt die Adresse der Datei 130, in die die eingehende Nachricht abgespeichert werden soll bereits fest, wird die einkommende Nachricht unmittelbar in den lokalen Zwischenspeicher 160 der Datei 130 abgespeichert. Die Überprüfung der Zugriffsberechtigung der Nachricht wird nun von der Prozessoreinheit 30, entsprechend dem oben Gesagten, mit der in dem lokalen Zwischenspeicher 160 gespeicherten Nachricht durchgeführt. Ist die Adresse der Datei 130, in welche die Nachricht abzulegen ist, bei Eingang der Nachricht noch nicht bekannt, wird die Nachricht zuerst in das RAM 40 eingelesen. Das Einlesen geschieht zumindest solange, bis die Adresse feststeht. Bei den augenblicklich verwendeten Kommunikationsprotokollen ist festgelegt, daß die Adresse für eine Abspeicherung der Nachricht z.B. innerhalb der ersten 4 Bytes der Nachricht zu finden ist, falls eine Adresse vorhanden ist.

Entsprechend könnte auch der für die Erkennung der Adresse notwendige Teil der Nachricht zuerst in den, für die zweite Ausführungsform optionalen Zwischenspeicher 140 eingeschrieben werden.

Bei den heute zur Verfügung stehenden beschreibbaren, nicht flüchtigen Speichern 60 ist, wie bereits oben angedeutet, ein Schreibzugriff um ein vielfaches langsamer als ein Schreibzugriff auf einen flüchtigen Speicher 40. Jedoch erfordert das augenblickliche Kommunikationsprotokoll für die Kommunikation mit der Prozessorkarte 10 eine bestimmte Schreibgeschwindigkeit für das Einlesen der Nachricht bzw. für zusammenhängende Teile der Nachricht, so daß bestimmte Schreibzugriffszeiten zumindest für die zusammenhängenden Teile der Nachricht nicht überschritten werden dürfen. Ansonsten wird die Kommunikation mit der Prozessorkarte 10 abgebrochen. Da die hierfür erforderliche minimal mögliche Schreibzugriffsgeschwindigkeit von den meisten heute zur Verfügung stehenden beschreibbaren, nicht flüchtigen Speichern 60 nicht eingehalten werden kann und zum Teil deutlich unterschritten wird, können die Nachrichten hier nicht unmittelbar in den beschreibbaren, nicht flüchtigen Speicher 60 eingeschrieben werden. Um dennoch eine Kommunikation durchführen zu können, werden die zusammenhängenden Teile der Nachricht zuerst in den flüchtigen Speicher 40 eingelesen und von dort in die entsprechenden Zwischenspeicher, wie den Zwischenspeicher 140 oder die lokalen Zwischenspeicher 150, 160, usw., kopiert.

Die Vorrichtung und das Verfahren gemäß der zweiten Ausführungsform reduziert so, bei in etwa gleicher Zugriffshäufigkeiten auf die einzelnen Dateien 110, die Gefahr der Überbenutzung nur eines Bereiches, wie z. B. des Zwischenspeichers 140. Dies ist insbesondere bei der Verwendung von multifunktionalen Prozessorkarten mit einer Vielzahl von verschiedenen Anwendungen, wobei jede Anwendung in zumindest einer Datei abgelegt ist, von Vorteil. Wird der lokale Zwischenspeicher 150, 160 einer der Anwendungen der multifunktionalen Prozessorkarte, z. B. durch das Erreichen des Lebensende einiger Speicherzellen zerstört, so werden dadurch andere Anwendungen nicht beeinträchtigt und können nach wie vor weiter benutzt werden.

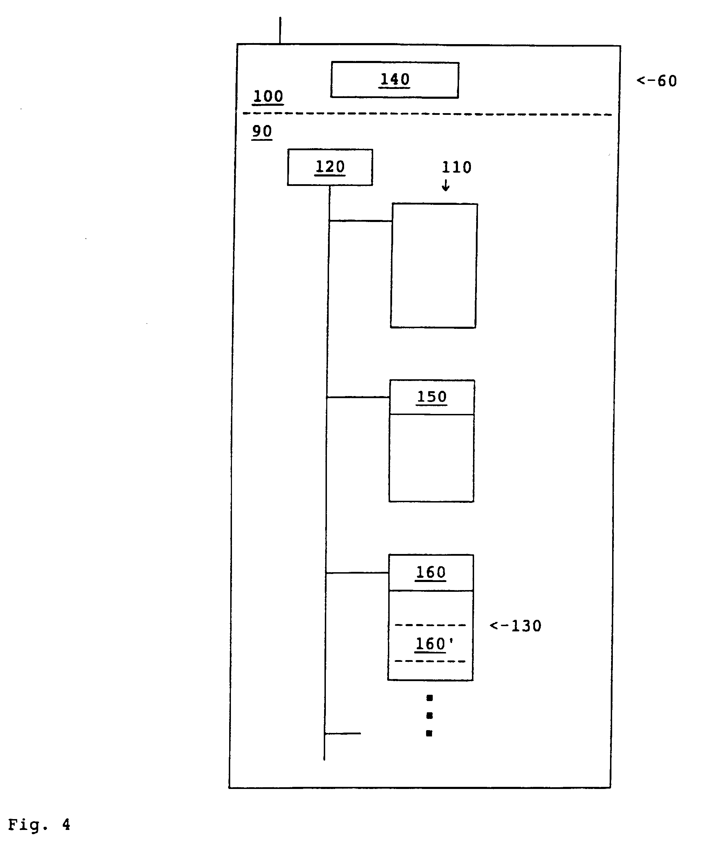

Bei einer dritten Ausführungsform wird der entsprechende lokale Zwischenspeicher 160 selbst als Datei 130, oder als Teilbereich davon, definiert und nicht der Inhalt der jeweiligen lokalen Zwischenspeicher 150, 160, usw. nach Feststehen der Zugriffsberechtigung an die entsprechende Stelle innerhalb der Datei 130 umkopiert oder verschoben. Ist die Datei 130 beispielsweise als eine verkettete Liste angelegt, so werden die Zeiger, die die Orte der einzelnen Datensätze definieren, innerhalb dieser Liste entsprechend vertauscht. Liegen die Datensätze jedoch in einer Art und Weise vor, daß diese mit einer Datensatznummer versehen sind, so müssen einfach nur die Datensatznummern entsprechend ausgetauscht werden. Mit anderen Worten werden bei dieser dritten Ausführungsform die Bereiche der einzelnen lokalen Zwischenspeicher bei einem erfolgreichen Schreibzugriff in die entsprechende Datei der Vielzahl von Dateien 110 eingeordnet, und eine andere Stelle der entsprechenden Datei als neuer lokaler Zwischenspeicher definiert. Fig. 4 zeigt eine solche Anordnung. In den lokalen Zwischenspeicher 160 der Datei 130 wurde zuerst die Nachricht geschrieben und, nach erfolgreich durchgeführter Authentifikation, die Schreibberechtigung der Nachricht festgestellt. Der alte lokale Zwischenspeicher 160 wird nun in die Datei 160 eingegliedert und ein neuer Bereich 160' der Datei 130 als neuer lokaler Zwischenspeicher 160' der Datei 130 definiert.

Die dritte Ausführungsform mit einem Umdefinieren und Eingliedern der jeweiligen lokalen Zwischenspeicher in die entsprechende Datei erlaubt gegenüber dem kompletten Umkopieren der vollständigen Nachricht, oder Teilen davon, aus einem der Zwischenspeicher in die entsprechende Position der Datei eine zum Teil drastische Reduzierung der Zugriffszeit für das Schreiben. Beispielsweise wird für eine Nachricht mit einer Datengröße von 100 Byte und einer Zugriffsgeschwindigkeit von 10ms pro 4 Byte für ein Schreiben der Daten in das EEPROM 60 eine Schreibzugriffszeit von 100 Byte X 10 ms / 4 Byte = 250 ms benötigt. Für den Fall, daß nur Zeiger vertauscht werden müssen, werden als zusätzliche Schreibzeit für das Umhängen der Zeiger in der verketteten Liste bei einer Datenbreite eines Zeigers von etwa 4 Byte weitere 10 ms Schreibzugriffszeit pro Zeiger, also insgesamt weitere 20ms notwendig. Entsprechend sind für den Fall, daß die Datensatznummern ausgetauscht werden müssen und eine Datensatznummer jeweils etwa 4 Byte Datengröße hat, ebenfalls 2 Schreibzugriffe von insgesamt 20ms erforderlich.

Die konventionelle Überprüfung der Zugriffsberechtigung einer Nachricht in dem RAM 40 und ein anschließendes Abspeichern in das EEPROM 60 erfordert zumindest einen Schreibvorgang der gesamten Nachricht in das RAM 40 und einen Schreibvorgang der zu speichernden Daten in das EEPROM 60. Demgegenüber erfordert die erfindungsgemäße Überprüfung der Zugriffsberechtigung entsprechend der ersten und der zweiten Ausführungsform zumindest einen Schreibvorgang der gesamten Nachricht in das EEPROM 60 und einen weiteren Schreibvorgang der zu speichernden Daten ebenfalls in das EEPROM 60. Die Überprüfung der Zugriffsberechtigung entsprechend der dritten Ausführungsform benötigt gleichermaßen zumindest einen Schreibvorgang der gesamten Nachricht in das EEPROM 60, jedoch ist der weitere Schreibvorgang in das EEPROM 60 auf die zum Umdefinieren der Datensätze benötigten Daten begrenzt.

Bei den heute erhältlichen Speichern ist der Schreibvorgang im EEPROM in etwa 10.000 mal langsamer ist als der Schreibvorgang im RAM, so daß so der Schreibvorgang im EEPROM 60 im wesentlichen die Gesamtschreibzeit bestimmt. Jedoch sind bei der Kommunikation weiterhin noch Zeiten für den Aufbau der Verbindung und die Authentifikation und Sicherheitsüberprüfung jeder einzelnen Nachricht mit zu berücksichtigen. Muß eine Nachricht, wie bei der konventionellen Überprüfung der Zugriffsberechtigung mit langen Nachrichten, in eine Vielzahl einzelner Teilnachrichten zerlegt werden, so fallen diese Zeiten für Aufbau der Verbindung, Authentifikation, Sicherheitsüberprüfung usw. für jede einzelne Teilnachricht an und müssen mit in die Kommunikationszeit eingerechnet werden. Ohne Berücksichtigung dieser Zeiten für den Verbindungsaufbau usw. verdoppelt sich damit bei den heutigen Speichern für die erste und zweite Ausführungsform die Gesamtschreibzeit gegenüber der konventionellen Überprüfung der Zugriffsberechtigung ausschließlich im RAM 40. Bei der dritten Ausführungsform hingegen verlängert sich die Gesamtschreibzeit, je nach dem Verhältnis der für die Umbenennung erforderlichen Datengröße zur Nachrichtengröße, nur einige wenige Prozentwerte. In Bezug auf die gesamte Kommunikationszeit (Zeiten für Verbindungsaufbau + Gesamtschreibzeit) für die Überprüfung der Zugriffsberechtigung einer Nachricht fallen diese Werte jedoch um so günstiger für die Ausführungsformen aus, je länger die Nachrichten. Insbesondere die dritte Ausführungsform erweist sich hier besonders vorteilhaft.

An einem Beispiel sollen die unterschiedlichen Überprüfungsweisen der Zugriffsberechtigung verdeutlicht werden: eine 100 Byte lange Nachricht soll in einer Prozessorkarte mit Schreibzugriffsgeschwindigkeiten von 10ms pro 4 Byte für ein Schreiben der Daten in das EEPROM 60 und 1µs pro 4 Byte für ein Schreiben der Daten in das RAM 40, bearbeitet werden. Da die Schreibzeiten der Daten in das RAM 40 keinen nennenswerten Beitrag zu der Gesamtschreibzeit der Nachricht leisten, können sie bei der hier überschlägig durchgeführten Berechnung entfallen. Zur Kennung der Datensätze seien 4 Byte notwendig und die gesamte Nachricht soll in dem EEPROM 60 abgelegt werden.
a) Die konventionelle Überprüfung der Zugriffsberechtigung der Nachricht, so anwendbar, würde etwa 250 ms Gesamtzugriffszeit benötigen.
b) Für die erste und zweite Ausführungsform der Erfindung wären für die Überprüfung der Zugriffsberechtigung der Nachricht etwa 2 x 250 ms = 500 ms Gesamtzugriffszeit erforderlich.
c) Für die dritte Ausführungsform der Erfindung hingegen, wären für die Überprüfung der Zugriffsberechtigung der Nachricht nur etwa 250 ms + 2 x 10ms = 270 ms Gesamtzugriffszeit erforderlich.

Dies ist bei der dritten Ausführungsform gegenüber der theoretischen Zeit für die konventionelle Überprüfung der Zugriffsberechtigung, die jedoch bei langen Nachrichten vielfach überhaupt nicht mehr angewandt werden kann, nur ein Zusatz an benötigter Zugriffszeit von 8%, obwohl die nahezu beliebig langen Nachrichten vollständig in dem EEPROM 60 verarbeitet werden können. Demgegenüber reduziert das erfindungsgemäße Prozessieren die Gesamtbearbeitungszeit für lange Nachrichten, da diese vollständig bearbeitet werden können und nicht in Teile zerlegt werden müssen.

Es ist zu verstehen, daß bei allen Ausführungsformen die einkommenden Nachrichten nicht unmittelbar in den beschreibbaren, nicht flüchtigen Speicher 60 eingeschrieben werden müssen. Für viele Anwendungen ist es vielmehr sinnvoller, bzw. kann es sogar notwendig sein (siehe oben), daß die Nachricht, oder auch nur Teile davon, zuerst in den flüchtigen Speicher 40 eingelesen und von dort in die entsprechenden Zwischenspeicher, wie den Zwischenspeicher 140 oder die lokalen Zwischenspeicher 150, 160, usw., kopiert oder verschoben werden. Zusammenhängende Teile der Nachricht sollten vorzugsweise immer gemeinsam entweder direkt in den beschreibbaren, nicht flüchtigen Speicher 60 gespeichert oder in dem flüchtigen Speicher 40 bzw. dem beschreibbaren, nicht flüchtigen Speicher 60, zwischengespeichert werden. Vorzugsweise stellt die Prozessorkarte 10 vor Beginn einer Kommunikation eine Anfrage, z.B. gemäß ISO/IEC 7816-3, auf Unterteilen der Nachricht in einzelne Teilnachrichten, wobei die Prozessorkarte 10 den zur Verfügung stehenden maximalen Speicherraum des flüchtigen Speichers 40 mitteilt, oder ein standardisierter Wert verwendet wird. Da bei den heutigen Speichern der Schreibzugriff auf ein EEPROM etwa 10.000 mal langsamer ist als der Schreibzugriff auf ein RAM, spielt ein temporäres Zwischenspeichern in dem RAM 40 nur eine untergeordnete Rolle.

Die erfindungsgemäße Prozessierung wird im allgemeinen durch das Betriebssystem 55 der Prozessorkarte 10 gesteuert und kontrolliert. Das Betriebssystem 55 weist vorzugsweise alle zur Ausforderung der Erfindung erforderlichen Anweisung z.B. in Form von Microcode oder dergleichen auf.

## Patentansprüche

1. Verfahren zur Verarbeitung einer Nachricht in einer Chipkarte (10) mit einer Prozessoreinheit (30) mit einem zumindest beschreibbaren, flüchtigen Speicher (40) und einem beschreibbaren, nicht flüchtigen Speicher (60), wobei eine Zugriffsberechtigung der Nachricht auf die Chipkarte (10) vor einer weiteren Behandlung der Nachricht überprüft wird, dadurch gekennzeichnet, daß die Nachricht vor der Überprüfung der Zugriffsberechtigung in einem definierten Bereich des beschreibbaren, nicht flüchtigen Speichers (60) entweder unmittelbar oder mittelbar gespeichert wird, wobei die mittelbare Speicherung im Sinne einer Zwischenspeicherung erfolgt, und eine endgültige Speicheradresse noch nicht festgelegt ist.

2. Verfahren nach Anspruch 1, dadurch gekennzeichnet, daß die Nachricht, oder Teile davon, vor der Überprüfung in dem beschreibbaren, nicht flüchtigen Speicher (60) in dem beschreibbaren, flüchtigen Speicher (40) zwischengespeichert wird.

3. Verfahren nach Anspruch 2, dadurch gekennzeichnet, daß die Nachricht vor der Überprüfung in dem beschreibbaren, nicht flüchtigen Speicher (60) in dem beschreibbaren, flüchtigen Speicher (40), z.B. auf eine Speicheradresse hin, vorprozessiert wird.

4. Verfahren nach einem der vorstehenden Ansprüche, dadurch gekennzeichnet, daß
- die Nachricht in einem Zwischenspeicher (140) in einem definierten Bereich (100) des beschreibbaren, nicht flüchtigen Speichers (60), der sich außerhalb eines Bereiches (90) mit einem Dateisystemen befindet, zwischengespeichert wird;
- nach erfolgter Speicherung der Nachricht in dem Zwischenspeicher (140) die Prozessoreinheit (30) die Zugriffsberechtigung der zwischengespeicherten Nachricht überprüft; und
- bei einer gültigen Zugriffsberechtigung die Nachricht aus dem Zwischenspeicher (140) in eine, für die Abspeicherung der Nachricht vorgesehene, Datei (130) einer Vielzahl von Dateien (110) kopiert oder verschoben wird.

5. Verfahren nach Anspruch 4, dadurch gekennzeichnet, daß der für den Zwischenspeicher (140) reservierte Speicherbereich nach einer bestimmten Anzahl von erfolgten Schreibzyklen an eine andere Stelle des Bereiches (100) verlegt wird.

6. Verfahren nach Anspruch 4 oder 5, dadurch gekennzeichnet, daß nur solche Nachrichten, die aufgrund ihrer Datengröße nicht unmittelbar in dem beschreibbaren, flüchtigen Speicher (40) empfangen werden können, in dem Zwischenspeicher (140) zwischengespeichert werden.

7. Verfahren nach einem der Ansprüche 4-6, dadurch gekennzeichnet, daß die eingehende Nachricht von der Prozessoreinheit (30) zuerst in den beschreibbaren, flüchtigen Speicher (40) geschrieben wird, bei Überschreiben der zur Verfügung stehenden Speichermenge des beschreibbaren, flüchtigen Speichers (40) der im beschreibbaren, flüchtigen Speicher (40) gespeicherte Teil der Nachricht in den Zwischenspeicher (140) kopiert und der Rest der Nachricht nun unmittelbar in den Zwischenspeicher (140) abgespeichert wird.

8. Verfahren nach einem der vorstehenden Ansprüche, wobei in der Chipkarte (10) für solche Dateien der Vielzahl von Dateien (110) deren Datensatzlänge die Größe eines Pufferspeichers (70) des beschreibbaren, flüchtigen Speichers (40) überschreitet, dadurch gekennzeichnet, daß
- bei Festliegen der Adresse einer Datei (130), in die die eingehende Nachricht abgespeichert werden sollte, die einkommende Nachricht unmittelbar in den lokalen Zwischenspeicher (160) der Datei (130) abgespeichert wird; und
- die Überprüfung der Zugriffsberechtigung der Nachricht mit der in dem lokalen Zwischenspeicher (160) gespeicherten Nachricht von der Prozessoreinheit (30) durchgeführt wird;

9. Verfahren nach nach einem der vorstehenden Ansprüche, dadurch gekennzeichnet, daß die Nachricht zuerst in den beschreibbaren, flüchtigen Speicher (40) eingelesen wird, wenn die Adresse der Datei (130), in welche die Nachricht abzulegen ist, bei Eingang der Nachricht noch nicht bekannt ist, und dies zumindest solange geschieht, bis die Adresse feststeht.

10. Verfahren nach einem der Ansprüche 4-9, dadurch gekennzeichnet, daß die zusammenhängenden Teile der Nachricht zuerst in den flüchtigen Speicher (40) eingelesen und von dort in die entsprechenden Zwischenspeicher (140, 150, 160) kopiert wird.

11. Verfahren nach einem der Ansprüche 8-10, dadurch gekennzeichnet, daß der Bereich des lokalen Zwischenspeichers (160) bei einem erfolgreichen Schreibzugriff in die entsprechende Datei (130) der Vielzahl von Dateien (110) eingeordnet und eine andere Stelle der entsprechenden Datei (130) als neuer lokaler Zwischenspeicher (160') definiert wird.

12. Verfahren nach einem der Ansprüche 8-11, dadurch gekennzeichnet, daß der jeweilige lokale Zwischenspeicher (150, 160) nach Feststehen der Zugriffsberechtigung selbst als Datei (130), oder als Teilbereich davon, definiert wird.

13. Verfahren nach Anspruch 11 oder 12, wobei die Datei (130) als eine verkettete Liste angelegt ist mit Zeigern, die die Orte der einzelnen Datensätze definieren, dadurch gekennzeichnet, daß zum Umdefinieren der jeweilige lokale Zwischenspeicher (150, 160) als Datei (130), oder als Teilbereich davon, die Zeiger innerhalb der Liste entsprechend vertauscht werden.

14. Verfahren nach Anspruch 11 oder 12, wobei die Datensätze in einer Art und Weise vorliegen, daß diese mit einer Datensatznummer versehen sind, dadurch gekennzeichnet, daß zum Umdefinieren der jeweilige lokale Zwischenspeicher (150, 160) als Datei (130), oder als Teilbereich davon, die Datensatznummern entsprechend ausgetauscht werden.

15. Verfahren nach einem der Ansprüche 8-14, dadurch gekennzeichnet, daß in den lokalen Zwischenspeicher (160) der Datei (130) zuerst die Nachricht geschrieben wird, nach erfolgreich durchgeführter Authentifikation die Zugriffsberechtigung der Nachricht festgestellt wird, und der alte lokale Zwischenspeicher (160) in die Datei 160 eingegliedert und ein neuer Bereich (160') der Datei (130) als neuer lokaler Zwischenspeicher (160') der Datei (130) definiert wird.

16. Verfahren nach einem der Ansprüche 4-15, dadurch gekennzeichnet, daß die Nachricht, oder auch nur Teile davon, zuerst in den flüchtigen Speicher (40) eingelesen und von dort in die entsprechenden Zwischenspeicher (140, 150, 160 ) kopiert oder verschoben werden.

17. Verfahren nach einem der vorstehenden Ansprüche, dadurch gekennzeichnet, daß zusammenhängende Teile der Nachricht immer gemeinsam entweder direkt in dem beschreibbaren, nicht flüchtigen Speicher (60) gespeichert oder, entweder in dem flüchtigen Speicher (40) oder dem beschreibbaren, nicht flüchtigen Speicher (60), zwischengespeichert werden.

18. Chipkarte (10) mit einer Prozessoreinheit (30), einem beschreibbaren, flüchtigen Speicher (40) mit einem Pufferspeicher (70), einem beschreibbaren, nicht flüchtigen Speicher (60) mit einer Vielzahl von Dateien (110), und Mitteln zur Überprüfung einer Zugriffsberechtigung einer Nachricht auf die Chipkarte (10) vor einer weiteren Behandlung der Nachricht, dadurch gekennzeichnet, daß in der Chipkarte (10) für solche Dateien der Vielzahl von Dateien (110), deren Datensatzlänge die Größe des Pufferspeichers (70) überschreitet, ein Bereich (120, 150, 160) im nicht flüchtigen Speicher vorgesehen ist, in dem die Nachricht vor der Überprüfung der Zugangsberechtigung entweder unmittelbar oder mittelbar abspeicherbar ist, wobei die mittelbare Abspeicherung der Nachricht im Sinne einer Zwischenspeicherung durchführbar ist, und noch keine endgültige Speicheradresse festgelegt ist.

## Claims

1. Method for processing a message in a chip card (10) with a processor unit (30) and an at least writable, volatile memory (40) and a writable, non-volatile memory (60), where authorization to access the message on the chip card (10) is verified before further processing of the message, characterised in that, prior to verification of the authorization to access the message, the message is stored, either directly or indirectly, in the writable non-volatile memory (60), where the direct storage is effected in the form of an interim storage and a final memory address has not been established.

2. Method in accordance with Claim 1, characterised in that the message or parts thereof, is stored, before verification in the writable non-volatile memory (60), is stored temporarily in the writable, volatile memory (40).

3. Method in accordance with Claim 2, characterised in that the message or part thereof, is preprocessed in the writable volatile memory (40), e.g. at a memory address, prior to verification in the writable non-volatile memory (60).

4. Method in accordance with one of the foregoing claims, characterised in that
- the message is stored temporarily in an interim memory (140) in a defined region (100) of the writable non-volatile memory (60) located outside a region (90) with a file system;
- after successful storage of the message in the interim memory (140) the processor unit (30) verifies the authorization to access the temporarily stored message; and
- with a valid authorization the message is copied or moved from the interim memory (140) into a file (130) of a plurality of files (110) intended for the storage of the message.

5. Method in accordance with Claim 4, characterised in that the memory location reserved for the interim storage (140) is replaced by another place in the region (100) after a pre-determined number of write cycles has been effected.

6. Method in accordance with Claims 4 or 5, characterised in that only those messages which cannot by reason of their data length be stored directly in the writable volatile memory (40), are stored temporarily in the interim memory (140).

7. Method in accordance with one of the claims 4-6, characterised in that the incoming message from the processor unit (30) is first stored in the writable volatile memory (40), on exceeding the amount of writable volatile memory (40) available, the part of the message stored in the writable volatile memory (40) is copied to the interim memory (140) and the remainder of the message now stored directly in the interim memory (140).

8. Method in accordance with one of the foregoing claims, [where a local interim memory (150, 160)] is provided on the chip card (10) for those files of the plurality of files (110) the data record length of which exceeds the size of a buffer memory (70) of the writable, volatile memory (40), characterised in that
- on establishing the address of a file (130) in which the incoming message is to be stored, the incoming message is directly stored in the local interim memory (160) of the file (130); and
- the checking of the authorization to access the message is carried out by the processor unit (30) stored in the local interim memory (160);

9. Method in accordance with one of the foregoing claims, characterised in that the message is first read into the writable volatile memory (40) if the address of the file (130) in which the message is to be stored is not yet known when the message is entered and this continues for at least until the address is established.

10. Method in accordance with one of the Claims 4-9, characterised in that the associated parts of the message are first read into the volatile memory (40) and from there are copied into the appropriate interim memory (140, 150, 160).

11. Method in accordance with one of the Claims 8-10, characterised in that, in the case of a successful write access, the region of the local interim memory (160) is arranged in the corresponding file (130) of the plurality of files (110) and another location of the corresponding file (130) defined as the new local interim memory (160').

12. Method in accordance with one of the Claims 8-11, characterised in that the relevant local interim memory (150, 160) is itself defined as a file (130) or as a part region thereof, after the authorization has been established.

13. Method in accordance with Claims 11 or 12, where the file (130) is stored as a linked list with pointers which define the locations of the data records, characterised in that to redefine the current local interim memory (150, 160) as a file (130), or as a part region thereof, the pointers in the list are exchanged accordingly.

14. Method in accordance with Claims 11 or 12, where the data records are present in such a way that they are provided with data record numbers, characterised in that to redefine the current local interim memory (150, 160) as a file (130) the data record numbers are exchanged accordingly.

15. Method in accordance with one of the Claims 8-14, characterised in that the message is first written into the local interim memory (160) of the file (130) after successful verification of authorization to access the message and the old local interim memory (160) is incorporated into the file 160 and a new region (160') of the file (130) defined as the new local interim memory (160') of the file (130).

16. Method in accordance with one of the Claims 4-15, characterised in that the message or also only parts thereof are first read into the volatile memory (40) and copied or moved from there into the appropriate interim memory (140, 150, 160).

17. Method in accordance with one of the foregoing claims, characterised in that the associated parts of the message are always either stored directly in the writable non-volatile memory (60) or temporarily stored either in volatilile memory (40) or in the writable non-volatile memory (60).

18. Chip card (10) with a processor unit (30), a writable volatile memory (40) with a buffer memory (70) and a writable, non-volatile memory (60) with a plurality of files (110) and means for verification of an authorisation to access a message on the chip card (10) before further processing of the message, characterised in that a region (120, 150, 160) in the non-volatile memory is provided on the chip card (10) for those files of the plurality of files (110), which have a data record length exceeding the size of the buffer memory (70), in which the message is dirctly or indirectly storable prior to verification of access authorisation, where the indirect storage of the message can be effected by temporary storage and then a final memory address established.

## Revendications

1. Procédé de traitement d'une information dans une carte à puce (10) avec une unité à processeur (30) équipée d'une mémoire volatile (40), au moins inscriptible, et d'une mémoire non volatile (60) inscriptible, une justification d'accès de l'information à la carte à puce (10) étant contrôlée avant la continuation du traitement de l'information, caractérisé en ce que l'information est mémorisée, soit directement soit indirectement, avant le contrôle de la justification d'accès, dans une zone définie de la mémoire non volatile (60) inscriptible, la mémorisation indirecte s'effectuant dans le sens d'un stockage intermédiaire et une adresse mémoire ultime n'ayant pas encore été fixée.

2. Procédé selon la revendication 1, caractérisé en ce que l'information ou des parties de celle-ci sont soumis à un stockage intermédiaire avant le contrôle, dans la mémoire non-volatile (60) inscriptible, dans la mémoire (40) volatile inscriptible.

3. Procédé selon la revendication 2, caractérisé en ce que l'information est préretraitée avant le contrôle dans la mémoire non-volatile (60) inscriptible, dans la mémoire volatile (40) inscriptible, par exemple à une adresse mémoire.

4. Procédé selon l'une des revendications précédentes, caractérisé en ce que
- l'information est soumise à un stockage intermédiaire dans une mémoire intermédiaire (140), dans une zone définie (100) de la mémoire non-volatile (60) inscriptible, qui se trouve hors d'une zone (90) ayant un système de fichier;
- une fois le stockage de l'information effectué dans le stockage intermédiaire (140), l'unité à processeur (30) contrôle l'autorisation d'accès de l'information ayant été soumis au stockage intermédiaire; et
- dans le cas où l'autorisation d'accès est valide, l'information issue de la mémoire intermédiaire (140) est copiée ou décalée dans un fichier (130) prévu pour le stockage de l'information, appartenant à une pluralité de fichiers (110).

5. Procédé selon la revendication 4, caractérisé en ce que la zone mémoire réservée pour la mémoire intermédiaire (140) est déplacée en un autre endroit de la zone (100) après exécution d'un nombre déterminé de cycles d'écriture.

6. Procédé selon la revendication 4 ou 5, caractérisé en ce que seules des informations qui peuvent être reçues de façon non-directe dans la mémoire volatile (40) inscriptible, du fait de la taille des données, sont soumises à un stockage intermédiaire dans la mémoire intermédiaire (140).

7. Procédé selon l'une des revendications 4-6, caractérisé en ce que l'information entrante est d'abord écrite par l'unité à processeur (30) dans la mémoire volatile (40) inscriptible, en cas de surécriture de la quantité de mémoire disponible de la mémoire volatile (40) inscriptible, la partie de l'information qui est mémorisée dans la mémoire volatile (40) inscriptible est copiée dans la mémoire intermédiaire (140) et le reste de l'information est alors directement mémorisé dans la mémoire intermédiaire (140).

8. Procédé selon l'une des revendications précédentes, dans lequel, dans la carte à puce (10), pour des fichiers appartenant à la pluralité de fichiers (110) dont la longueur de jeux de fichier dépasse la taille d'une mémoire tampon (70) de la mémoire volatile (40) inscriptible, le procédé est caractérisé en ce que
- lors de la fixation de l'adresse d'un fichier (130) dans lequel l'information entrante devrait être mémorisée, l'information entrante est directement mémorisée dans la mémoire intermédiaire locale (160) du fichier (130); et
- le contrôle de l'autorisation d'accès de l'information est effectué par l'unité à processeur (30) avec l'information mémorisée dans la mémoire intermédiaire locale (160).

9. Procédé selon l'une des revendications précédentes, caractérisé en ce que l'information est d'abord lue dans la mémoire volatile (40) inscriptible, lorsque l'adresse du fichier (130), dans laquelle l'information doit être placée, n'est pas encore connue à l'entrée de l'information, et ceci s'effectuant au moins jusqu'à ce que l'adresse soit fixée.

10. Procédé selon l'une des revendications 4-9, caractérisé en ce que les parties liées de l'information sont d'abord introduites, par lecture, dans la mémoire volatile (40) et, de là, sont copiées dans les mémoires intermédiaires (140, 150, 160) correspondantes.

11. Procédé selon l'une des revendications 8-10, caractérisé en ce que la zone de la mémoire intermédiaire locale (160), lorsqu'un accès d'écriture a été réussi, est classée dans le fichier (130) correspondant parmi la pluralité de fichiers (110), et un autre emplacement du fichier (130) correspondant, est défini comme nouvelle mémoire intermédiaire locale (160').

12. Procédé selon l'une des revendications 8-11, caractérisé en ce que la mémoire intermédiaire locale (150, 160) respective, après fixation de l'autorisation d'accès, est définie elle-même comme fichier (130) ou comme zone partielle de celui-ci.

13. Procédé selon la revendication 11 ou 12, le fichier (130) étant fixé comme une liste concaténée, avec des indicateurs qui définissent les emplacements des différents jeux de fichier, caractérisé en ce que pour redéfinir les mémoires intermédiaires (150, 160) locales comme fichier (130) ou comme zone partielle de celui-ci, les indicateurs sont permutés de manière correspondante à l'intérieur de la liste.

14. Procédé selon la revendication 11 ou 12, les jeux de données se présentant de manière qu'ils soient dotés d'un numéro de jeux de données, caractérisé en ce que, pour redéfinir les mémoires intermédiaires locales (150, 160) respectives comme fichier (130) ou comme zone partielle de celui-ci, les numéros de jeux de données sont permutés de manière correspondante.

15. Procédé selon l'une des revendications 8-14, caractérisé en ce que dans les mémoires intermédiaires locales (160) du fichier (130) est d'abord écrit de l'information, une fois l'authentification effectuée avec succès, l'autorisation d'accès de l'information est constatée, et l'ancienne mémoire intermédiaire locale (160) est intégrée dans le fichier (160) et une nouvelle zone (160') du fichier (130) est définie comme nouvelle mémoire intermédiaire locale (160') du fichier (130).

16. Procédé selon l'une des revendications 4-15, caractérisé en ce que l'information, ou bien également des parties de celle-ci, sont d'abord introduites, par lecture, dans la mémoire volatile (40) et, de là, copiée ou déplacée dans les mémoires intermédiaires (140, 150, 160) correspondantes.

17. Procédé selon l'une des revendications précédentes, caractérisé en ce que des parties liées de l'information sont mémorisées toujours conjointement, soit directement, dans la mémoire non-volatile (60) inscriptible, soit soumises à un stockage intermédiaire, dans la mémoire volatile (40), ou bien dans la mémoire non-volatile (60) inscriptible.

18. Carte à puce (10), avec une unité à processeur (30), une mémoire volatile (40) inscriptible avec une mémoire tampon (70), une mémoire non-volatile (60) inscriptible avec une pluralité de fichiers (110), et des moyens pour contrôler une autorisation d'accès d'une information à la carte à puce (10) avant une continuation du traitement de l'information, caractérisée en ce que dans la carte à puce (10) pour des fichiers, appartenant à la pluralité de fichiers (110), dont la longueur de jeux de fichier dépasse la taille de la mémoire tampon (70), est prévue, dans la mémoire non-volatile, une zone (120, 150, 160) dans laquelle l'information est mémorisable, soit directement soit indirectement, avant le contrôle d'autorisation d'accès, la mémorisation indirecte de l'information pouvant être effectuée au sens d'un stockage intermédiaire, et aucune adresse mémoire ultimement valable n'étant encore fixée.
